# FASCICULE DE BREVET EUROPEEN

(11) **EP 0 498 793 B1**
(45) Date de publication et mention de la délivrance du brevet: **24.08.1994**
(21) Numéro de dépôt: 90907133.4
(22) Date de dépôt: 23.04.1990
(51) Int. Cl.: B06B 1/06, G01H 3/00

(54) **PROCEDE DE FABRICATION D'UN CAPTEUR ACOUSTIQUE ET CAPTEUR ACOUSTIQUE AINSI OBTENU, A COUCHE DE PROTECTION SENSIBLEMENT INDECOLLABLE**
VERFAHREN ZUR HERSTELLUNG EINES AKUSTISCHEN SENSORS UND SO ERHALTENER SENSOR MIT ABSOLUT NICHTLÖSENDER SCHUTZSCHICHT
PROCESS FOR MANUFACTURING AN ACOUSTIC SENSOR WITH AN ESSENTIALLY NON-DETACHABLE PROTECTIVE LAYER, AND ACOUSTIC SENSOR SO OBTAINED

(30) Priorité: 24.04.1989 FR 8905422
(43) Date de publication de la demande: 19.08.1992
(73) Titulaire: TECHNOMED MEDICAL SYSTEMS, 69120 Vaulx-en-Velin (FR); INSTITUT NATIONAL DE LA SANTE ET DE LA RECHERCHE MEDICALE (INSERM), 75654 Paris Cédex 13 (FR)
(72) Inventeur: Mestas,Jean-Louis, F-69680 Chassieu (FR); Cathignol, Dominique, F-69740 Genas (FR)
(74) Mandataire: Portal, Gérard
(86) Numéro de dépôt international: FR9000287
(87) Numéro de publication internationale: WO9012658

(56) Documents cités:
- EP-A- 0 295 907
- US-A- 4 316 115
- US-A- 4 577 132
- Journal of Physics E. Scientific Instruments, volume 14, no. 11, novembre 1981, The Institute of Physics (Dorking, GB), K.F. Bainton et al.: "An easily constructed, broad bandwidth ultrasonic probe for research purposes", pages 1313-1319

## Description

La présente invention concerne essentiellement un procédé de fabrication d'un capteur acoustique ainsi que le capteur acoustique ainsi obtenu, à couche de protection sensiblement indécollable.

On connaît déjà divers capteurs acoustiques d'ondes acoustiques. Par exemple P.A. Lewin décrit dans la revue ultrasonics, pages 213-215, septembre 1981, un hydrophone pour la détection d'ondes ultrasoniques. Cet hydrophone utilise comme éléments de détection des ondes ultrasoniques, une feuille de polymère piézo-électrique, de préférence réalisée en fluorure de polyvinylidène (PVF2 ou PVDF). Cependant, cet hydrophone n'est pas utilisable pour détecter des ondes de choc car celles-ci détruisent très rapidement les zones de contact des éléments détecteurs qui sont montés directement sur un support construit de manière rigide.

Une solution pour résoudre ce problème a déjà été tentée par S.W. Meeks et décrite dans le "Journal of the Acoustical Society of America" 1984, page 1 010.

Par ailleurs, une autre solution a été proposée dans le document US-A-4 756 192. Selon cette solution, le détecteur comprend un conducteur interne, un conducteur externe tubulaire servant de logement coaxial au conducteur interne et étant caractérisé en ce qu'il comprend une feuille rectangulaire piézo-électrique de PVDF, un support relativement épais en PVDF introduit à l'intérieur du conducteur tubulaire externe, des évidements étant prévus sur le conducteur tubulaire externe prêt de la feuille de PVDF pour assurer une séparation spatiale. Il est dit en colonne 2, lignes 16-17 que la feuille peut, comme précaution supplémentaire, être pourvue d'une couche isolante ; et en colonne 2, lignes 57 à 60, il est précisé que pour éviter des dommages résultant de processus de cavitation, la feuille détectrice peut être protégée au moyen d'une couche mince isolante telle qu'un oxyde d'aluminium ou un oxyde de silicium dont l'épaisseur est de préférence d'environ 10 »m. Cette couche isolante peut être réalisée sur l'une ou les deux faces de la feuille.

Cependant, cette couche isolante qui n'est réalisée que sur la face apparente de la feuille n'adhère pas solidement à la feuille et va être décollée très rapidement à cause des effets de cavitation résultant des ondes de choc. En outre, il n'est pas prévu selon ce document que la couche isolante soit disposée également au-dessus des électrodes apparentes 4a. Etant donné que le détecteur doit être plongé dans l'eau qui est le fluide servant à la propagation des ondes de choc, ce dispositif ne réalise pas réellement l'isolation électrique vis-à-vis du milieu de propagation des ondes.

Encore une autre solution est connue par le document EP-A-0 256 438 qui met en oeuvre une feuille métallique mince 17 qui se déforme sous l'effet des impulsions 23 provoquées par les ondes de choc. Selon cette solution, on réalise une détection optique de la déformation 29 de la feuille métallique 17 causée par les ondes de choc. Il s'agit donc d'un procédé de mesure totalement différent.

Selon le brevet US-A-4.577.132 on fait adhérer un film en polyester (5) d'épaisseur 15 »m sur la feuille PVDF(4), dans le but de protéger la surface et de réduire la fréquence opératoire. Le film (5) va aisément se défacher de la feuille en PVDF(4), qui elle-même se détachera de la plaque en cuivre (2) de forme concave.

La présente invention a pour but de résoudre le nouveau problème technique consistant en la fourniture d'une solution de détecteur d'ondes de choc utilisant une feuille de détection piézo-électrique, par exemple type PVDF, isolée électriquement du milieu de propagation des ondes acoustiques, en particulier des ondes de choc, par une couche de protection électriquement isolante qui soit pratiquement ou très difficilement décollable de la feuille piézo-électrique.

La présente invention a encore pour but de résoudre ce nouveau problème technique en fournissant une solution qui soit particulièrement simple, et ne nécessite que la mise en oeuvre d'un procédé simple, peu coûteux, utilisable à l'échelle industrielle.

La présente invention a encore pour but de résoudre ces nouveaux problèmes techniques grâce à une solution qui permette une grande reproductibilité des qualités et capacités du détecteur.

La présente invention résout pour la première fois d'une manière simultanée les problèmes techniques énoncés ci-dessus, de manière satisfaisante, utilisable à l'échelle industrielle.

Ainsi, selon un premier aspect, la présente invention fournit un procédé de fabrication d'un capteur acoustique d'ondes acoustiques, en particulier des ondes de choc se propageant dans un milieu de propagation environnant le capteur, pour mesurer la pression mécanique desdites ondes, du type comprenant l'emploi d'un élément sensible comprenant une feuille piézo-électrique, en particulier en PVDF, montée sur un support et reliée électriquement à des électrodes connectées par des conducteurs électriques à un dispositif de mesure, caractérisé en ce qu'on enrobe l'ensemble de la feuille piézo-électrique et de son support d'une couche de revêtement polymérisable monobloc, électriquement isolante, de sorte que la partie de revêtement au-dessus de la feuille piézo-électrique constitue une couche de protection électriquement isolante qui est rendue indécollable ou essentiellement indécollable de la feuille piézoélectrique.

Avantageusement, on utilise une feuille piézo-électrique de faible surface relativement aux surfaces mises en jeu au moment du moulage de la couche de revêtement.

Selon un mode de réalisation particulièrement avantageux, on utilise un support ayant une forme sensiblement cylindrique, dont une extrémité du cylindre servant de face support de la feuille piézo-électrique qui est d'une dimension suffisante pour déborder latéralement autour du cylindre.

Selon une caractéristique également préférée, le diamètre du cylindre support de la feuille piézo-électrique est inférieur au diamètre final du capteur de sorte qu'en remplissant l'espace autour du support cylindrique de la feuille piézo-électrique et au-dessus de la feuille piézo-électrique on crée une couche monobloc de protection de cette feuille et de fixation définitive de celle-ci sur le support cylindrique, notamment grâce à la très grande surface de contact au niveau du cylindre support.

Comme matériau pour réaliser la couche de revêtement polymérisable, électriquement isolante, on peut citer par exemple les résines époxydes polymérisables, notamment de type araldite ou par exemple un produit tel que le polychlorotrifluoréthylène d'impédance sensiblement identique au PVDF.

De préférence, la couche de protection est coulée de manière à présenter un profil sensiblement cylindrique.

Selon encore une autre caractéristique avantageuse du procédé selon l'invention, on dispose l'ensemble du support cylindrique, de la feuille piézo-électrique et de la couche monobloc de protection électriquement isolante, à l'intérieur d'un fourreau formant blindage électrique, ayant de préférence une forme cylindrique creuse s'étendant vers l'avant du capteur jusqu'à sensiblement le niveau de la feuille piézo-électrique. Le cylindre support de la feuille PVDF est avantageusement constitué par un barreau plein réalisé également en le même matériau polymérisable que la couche de revêtement.

On conçoit ainsi que grâce à l'invention, on obtient une fixation très efficace de la feuille piézo-électrique sur son support ainsi que de la couche de protection, électriquement isolante. En effet, la feuille piézo-électrique est enchâssée dans un bloc en matériau électriquement isolant macroscopiquement indéformable, ce qui assure un contact permanent entre la feuille piézo-électrique et la couche de protection, donc une transmission des ondes acoustiques, en particulier des ondes de choc, parfaites, contrairement à ce qui était réalisé dans l'art antérieur où un espace se créait, si minime soit-il, entre la feuille piézo-électrique et la couche de protection interrompant ainsi la transmission des ondes.

Il est préféré selon l'invention que le matériau polymérisable de la couche de revêtement présente une impédance acoustique voisine de celle de la feuille piézo-électrique, de façon à éviter des réflexions des ondes acoustiques à chaque interface.

L'épaisseur de la couche de protection doit être suffisante pour assurer une isolation électrique efficace et une protection contre les chocs et ne pas être trop importante pour ne pas trop déformer les fronts d'ondes, conserver une bande passante raisonnable, éviter de trop limiter la sensibilité du capteur, ce qui est particulièrement avantageux pour la détection des ondes de pression dues aux ondes de choc mécaniques des générateurs d'ondes de choc mécaniques, notamment ceux utilisés pour la lithothritie.

Selon un deuxième aspect, la présente invention couvre également un capteur acoustique d'ondes acoustiques, en particulier d'ondes de choc, se propageant dans un milieu de propagation environnant le capteur, pour mesurer la pression desdites ondes, du type comprenant un élément sensible comprenant une feuille piézo-électrique, en particulier en PVDF, montée sur un support et reliée électriquement à des électrodes connectées par des conducteurs électriques à un dispositif de mesure, caractérisé en ce que l'ensemble de la feuille piézo-électrique et de son support est enrobé d'une couche de revêtement polymérisée monobloc, électriquement isolante, la partie de la couche de revêtement au-dessus de la feuille piézo-électrique constituant ainsi une couche de protection rendue indécollable ou essentiellement indécollable de la feuille piézo-électrique.

D'autres caractéristiques de ce capteur résultent clairement de la description précédente qui a été faite relativement au procédé de fabrication.

D'autres buts, caractéristiques et avantages de l'invention apparaîtront clairement à la lumière de la description explicative qui va suivre faite en référence aux dessins annexés représentant un mode de réalisation actuellement préféré de l'invention donnés simplement à titre d'illustration et qui ne sauraient donc en aucune façon limiter la portée de l'invention. Dans les dessins :
- la figure 1 représente une vue en coupe axiale longitudinale de la partie essentielle d'un capteur acoustique selon l'invention, selon un mode de réalisation actuellement préféré ; et
- la figure 2 représente une vue frontale selon la flèche II de la figure 1.

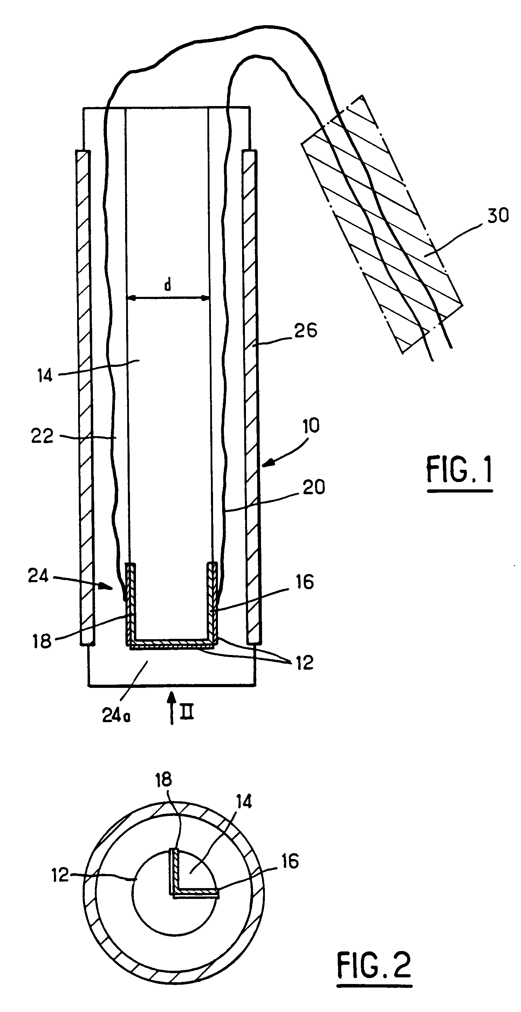

En référence aux figures 1 et 2, un capteur acoustique selon l'invention est représenté par le numéro de référence général 10. Ce capteur acoustique 10 comprend une feuille piézo-électrique 12, par exemple en PVDF. De préférence, cette feuille de PVDF est entièrement polarisée. L'épaisseur du film de PVDF détermine la fréquence de résonance du capteur. Par exemple, si on utilise un film ayant une épaisseur de 25 »m, la fréquence de résonance propre du composant sensible est de l'ordre de 20 à 25 MHz. La bande passante des capteurs fixée par son enrobage suivant la construction représentée aux figures 1 et 2 est de l'ordre de 5 à 10 MHz.

Cette feuille piézo-électrique 12 est montée sur un support 14, et porte des électrodes 16, 18 connectées par des conducteurs électriques 20, 22 à un dispositif de mesure (non représenté), comme cela est bien connu à l'homme de l'art des capteurs. On pourra se référer par exemple aux documents de la technique antérieur cités dans la partie introductive de la description et notamment à US-4 756 192 pour la connection électrique.

Selon l'invention, le capteur acoustique est caractérisé en ce que la feuille piézo-électrique 12 constitue un élément sensible du capteur, ainsi que le support 14 sont enrobés d'une couche de revétement polymérisée 24 monobloc, de préférence électriquement isolante, de sorte que la partie 24a de la couche de revêtement 24, située au-dessus de la feuille 12 constitue une couche de protection qui est rendue indécollable ou pratiquement indécollable de la feuille 12.

Selon une variante de réalisation avantageuse du dispositif formant capteur selon l'invention, le support 14 a la forme d'un cylindre plein formant barreau, comme cela est clairement compréhensible à partir de la considération des figures 1 et 2. Ce cylindre est avantageusement réalisé en un matériau d'impédance identique ou voisine de l'impédance de la feuille piézo-électrique 12. De même, avantageusement, l'impédance du matériau polymérisable utilisé pour constituer la couche de protection 24 est identique ou voisine de l'impédance de la feuille piézo-électrique 12.

Dans une variante de réalisation avantageuse, on comprendra que le matériau polymérisable pour réaliser le cylindre support 14 et la couche de protection 24 est identique. Comme matériau polymérisable, on peut utiliser selon l'invention tout matériau polymérisable qui à l'état polymérisé est électriquement isolant, en particulier les résines époxydes, notamment de type araldite.

L'épaisseur de la couche de protection 24a située au-dessus de la feuille piézo-électrique 12 doit être suffisante pour assurer une isolation électrique efficace et une protection contre les chocs et ne pas être trop importante pour ne pas déformer les fronts d'ondes, conserver une bande passante raisonnable et éviter de trop limiter la sensibilité du capteur. En pratique, une épaisseur de l'ordre de 5 dixièmes de millimètres permet de répondre à ces deux critères et permet d'assurer une détection d'ondes de choc dont la durée de montée en pression est de l'ordre de 100 ns, ce qui est largement suffisant pour caractériser de manière industrielle les ondes de choc, en particulier celles produites dans le cadre de la lithothritie, et en particulier dans le cadre des générateurs électrohydrauliques.

Comme cela se conçoit bien à partir des figures 1 et 2, la couche de protection électriquement isolante 24 peut présenter elle-même un profil cylindrique. Par ailleurs, selon une variante de réalisation avantageuse de l'invention, on peut prévoir la présence d'un fourreau 26 à l'intérieur duquel est disposé au moins en partie le support 14 avec la couche de protection 24, ce fourreau 26 s'étendant longitudinalement jusqu'à sensiblement le niveau de la feuille piézo-électrique 12, comme cela est clairement visible et représenté aux figures 1 et 2. Ce fourreau 26 est de préférence électriquement conducteur en étant réalisé en un métal, tel qu'en acier inoxydable, qui est avantageusement relié à la masse ou à la terre pour assurer ainsi un blindage métallique qui élimine les parasites électriques générés par la source des ondes de choc. Ceci est particulièrement important et avantageux dans le cas d'appareil de lithothritie lorsqu'on emploie des capteurs peu sensibles tels que ceux utilisant une feuille piézo-électrique type PVDF. En outre, on peut également prévoir un blindage auxiliaire 30 des conducteurs électriques à l'extérieur du capteur.

En ce qui concerne les électrodes 16, 18, celles-ci sont disposées perpendiculairement l'une à l'autre, de part et d'autre de la feuille piézo-électrique 12, selon l'invention de manière à former un angle sensiblement égal à 90°. Les électrodes peuvent être formées avantageusement par des bandes métalliques de quelques micromètres d'épaisseurs, de préférence en or, déposées par un procédé de métallisation sous vide sur la feuille de PVDF. Ces bandes métalliques peuvent avantageusement se rejoindre sensiblement au centre de la face apparente servant effectivement à la détection, qui est visible à la figure 2 et qui a sensiblement la forme d'un disque, dont le diamètre est défini par le diamètre d du cylindre 14.

On comprend que selon l'invention il est très aisé de fabriquer ce capteur puisque l'on peut réaliser par moulage le support 14 à partir d'un matériau polymérisable. De préférence, on choisit un matériau qui présente la même impédance que celle de la feuille piézo-électrique ou une impédance voisine. On préfère utiliser un matériau polymérisable type résine époxyde, en particulier type araldite, ce dernier matériau étant bien connu à l'homme de l'art ou un polychlorotrifluoréthylène d'impédance identique au PVDF. Ensuite, on dépose la feuille piézo-électrique, par exemple en PVDF dont la dimension est supérieure au diamètre d du support 14, de manière à déborder latéralement au support 14, ici de forme cylindrique. Cette feuille piézo-électrique 12 a été préalablement pourvue des électrodes 16, 18 disposées de part et d'autre de la feuille, comme précédemment indiqué, et comme cela est connu dans l'art des capteurs acoustiques. Les électrodes 16, 18 sont également connectées à des connecteurs électriques 20, 22.

Ensuite, cet ensemble est disposé dans un moule, ici par exemple de forme cylindrique, et qui présente un diamètre voisin du diamètre final du capteur. Dans ce moule, on coule le matériau polymérisable, qui a avantageusement une impédance identique ou voisine de l'impédance de la feuille piézo-électrique 12 de manière que l'ensemble du support 14 de la feuille piézo-électrique 12 soit enrobé de la couche de revêtement 24 polymérisable, qui est monobloc, et de préférence électriquement isolante. Avantageusement, le matériau polymérisable est une résine époxyde, en particulier type araldite.

On comprend ainsi que l'on obtient une couche monobloc de protection de la feuille piézo-électrique 12 et des fixations définitives de celle-ci sur le support 14, grâce à la très grande surface de contact au niveau du cylindre support 14.

Par ailleurs, le capteur est isolé électriquement de l'eau dans laquelle il est plongé. On comprend l'avantage de cette construction et la facilité de fabrication, puisque le corps entier du capteur est fait de matériau polymérisable tel qu'une résine époxyde, notamment type araldite.

Par ailleurs, on peut terminer le capteur en l'insérant dans un fourreau de protection 26 électriquement conducteur, relié à la masse ou à la terre, comme représenté.

Ainsi, l'invention comprend naturellement tous les moyens techniques constituant des équivalents techniques des moyens décrits ainsi que leurs diverses combinaisons.

Il est encore à noter que la longueur du barreau dépend de la durée du signal de pression à observer. Par exemple, si la vitesse acoustique de la résine polymérisable choisie est de 2 700 m/s, une onde qui frappe l'élément sensible 14 va venir perturber la mesure de l'onde transmise. Un barreau de 30 mm de long permettra la visualisation d'un signal de pression pendant au moins 20 microsecondes, ce qui constitue une durée suffisante pour permettre une détection aisée des ondes acoustiques.

## Revendications

1. Procédé de fabrication d'un capteur acoustique (10) d'ondes acoustiques, en particulier d'ondes de choc, se propageant dans un milieu de propagation environnant le capteur pour mesurer la pression desdites ondes, comprenant l'emploi d'un élément sensible comprenant une feuille piézo-électrique (12), en particulier en PVDF, montée sur un support (14) et reliée électriquement à des électrodes (16, 18) connectées par des conducteurs électriques (20, 22) à un dispositif de mesure, caractérisé en ce qu'on enrobe l'ensemble de la feuille piézo-électrique (12) et de son support (14) d'une couche de revêtement polymérisable monobloc (24), de préférence électriquement isolante, de sorte que la partie (24a) de la couche de revêtement (24) au-dessus de la feuille piézo-électrique (12) constitue une couche de protection qui est rendue indécollable, ou essentiellement indécollable, de la feuille piézo-électrique (12).

2. Procédé selon la revendication 1, caractérisé en ce qu'on utilise une feuille piézo-électrique (12) de faible surface relativement aux surfaces mises en jeu au moment du moulage.

3. Procédé selon la revendication 1 ou 2, caractérisé en ce que le support a une forme sensiblement cylindrique, dont une extrémité du cylindre sert de face support de la feuille piézo-électrique (12) qui est d'une dimension suffisante pour déborder latéralement autour du cylindre (14).

4. Procédé selon la revendication 3, caractérisé en ce que le cylindre support (14) est d'un diamètre inférieur au diamètre final du capteur (10) de manière qu'en remplissant l'espace autour du support cylindrique (14) de la feuille piézo-électrique (12) et au-dessus de la feuille (12), on crée une couche monobloc (24) de protection de la feuille et de fixation définitive de la feuille (12) sur le support (14), grâce à la très grande surface de contact au niveau du cylindre support.

5. Procédé selon l'une des revendications 1 à 4, caractérisé en ce que l'ensemble du support (14), de la feuille piézo-électrique (12) et de la couche monobloc de protection (24) est disposé au moins en partie à l'intérieur d'un fourreau de blindage électrique (26) relié à la masse ou à la terre.

6. Capteur acoustique d'ondes acoustiques, en particulier d'ondes de choc, se propageant dans un milieu de propagation environnant le capteur pour mesurer la pression desdites ondes, comprenant une feuille piézo-électrique (12), en particulier en PVDF, montée sur un support (14) et reliée électriquement à des électrodes (16, 18) connectées par des conducteurs électriques (20, 22) à un dispositif de mesure, caractérisé en ce que l'ensemble de la feuille piézo-électrique (12) et de son support (14) est enrobé d'une couche de revêtement (24) polymérisée monobloc, de préférence électriquement isolante, de sorte que la partie (24a) de la couche de revêtement (24) au-dessus de la feuille piézo-électrique (12) constitue une couche de protection qui est rendue indécollable ou essentiellement indécollable de la feuille piézo-électrique (12).

7. Capteur selon la revendication 6, caractérisé en ce que le support (14) a sensiblement la forme d'un cylindre, dont une extrémité sert de face support de la feuille piézo-électrique (12) qui est d'une dimension suffisante pour déborder latéralement autour du cylindre (14).

8. Capteur selon la revendication 6 ou 7, caractérisé en ce que le cylindre support (14) est d'un diamètre (d) inférieur au diamètre final du capteur de manière qu'en remplissant l'espace autour du support cylindrique (14) et au-dessus de la feuille (12), la couche de protection (24) monobloc précitée soit obtenue.

9. Capteur selon l'une des revendications 6 à 8, caractérisé en ce que le matériau de la couche de revêtement est un matériau électriquement isolant polymérisable, de préférence choisi parmi une résine époxyde polymérisable, notamment du type araldite ou un produit tel que le polychlorotrifluoréthylène d'impédance sensiblement identique au PVDF.

10. Capteur selon l'une des revendications 6 à 9, caractérisé en ce que le matériau polymérisable de la couche de protection (24) présente une impédance qui est identique ou voisine de l'impédance de la feuille piézo-électrique (12) ; avantageusement, le support (14) est réalisé en le même matériau polymérisable.

## Claims

1. Method for manufacturing an acoustic sensor (10) of sound waves, in particular shockwaves, propagating in a propagation medium surrounding the sensor, for measuring the pressure of said waves including using a sensitive element having a piezoelectric sheet (12), in particular a PVDF sheet, mounted on a support (14) and electrically connected to electrodes (16,18) connected by electrical conductors (20,22) to a measurement device, characterized in that the assembly constituted by the piezoelectric sheet (12) and its support (14) is coated with a one-piece polymerizable coating layer (24) which is preferably electrically insulating, such that the portion (24a) of the coating layer (24) overlying the piezoelectric sheet (12) constitutes a protective layer which is rendered non-detachable, or essentially non-detachable from the piezoelectric sheet (12).

2. Method according to claim 1, characterized in that a piezoelectric sheet (12) is used which has a small surface relatively to the surfaces involved during molding.

3. Method according to claim 1 or 2, characterized in that the support is substantially cylindrical in shape, with one end of the cylinder serving as a support face for the piezoelectric sheet (12) which sheet is large enough in size to overlap around the sides of cylinder (14).

4. Method according to claim 3, characterized in that the support cylinder (14) has a diameter smaller than the final diameter of the sensor (10) so that by filling the space around the cylindrical support (14) of the piezoelectric sheet (12) and over the sheet (12), a one-piece protective layer (24) is created for the sheet, which layer also serves to definitively fix the sheet (12) on the support (14) by virtue of its very large surface of contact with the support cylinder.

5. Method according to one of claims 1 to 4, characterized in that the assembly comprising the support (14), the piezoelectric sheet (12), and the one-piece protective layer (24) is disposed at least in part inside an electrical screening sheath (26) which is grounded or earthed.

6. Acoustic sensor for sensing sound waves, in particular shockwaves, propagating in a propagation medium surrounding the sensor for measuring the pressure of said waves, comprising a piezoelectric sheet (12), in particular a PVDF sheet, mounted on a support (14) and electrically connected to electrodes (16,18) connected by electrical conductors (20,22) to a measurement device, characterized in that the assembly constituted by the piezoelectric sheet (12) and its support (14) is coated with a one-piece polymerized coating layer (24), which is preferably electrically insulating, such that the portion (24a) of the coating layer (24) overlying the piezoelectric sheet (12) constitutes a protective layer which is rendered non-detachable or essentially non-detachable from the piezoelectric sheet (12).

7. Sensor according to claim 6, characterized in that the support (14) is substantially cylindrical in shape, with one end serving as a support face for the piezoelectric sheet (12) which is of sufficient size to overlap the sides around the cylinder (14).

8. Sensor according to claim 6 or 7, characterized in that the support cylinder (14) has a diameter (d) which is less than the final diameter of the sensor such that said one-piece protective layer (24) may be obtained by filling the space around the cylindrical support (14) and over the sheet (12).

9. Sensor according to one of claims 6 to 8, characterized in that the material of the coating layer is a polymerizable electrically insulating material, preferably selected from the polymerizable epoxy resins, in particular of the araldite type, or a product such as polychlorotrifluoroethylene whose impedance is substantially identical to that of PVDF.

10. Sensor according to one of claims 6 to 9, characterized in that the polymerizable material of the protective layer (24) has an impedance which is identical or close to the impedance of the piezoelectric sheet (12); the support (14) being advantageously made of the same polymerizable material as the protective layer.

## Patentansprüche

1. Verfahren zur Herstellung eines akustischen Fühlers (10) für Schallwellen, insbesondere Stoßwellen, die sich in einem den Fühler umgebenden Ausbreitungsmedium fortpflanzen, zwecks Messung des Drucks dieser Wellen, umfassend den Einsatz eines empfindlichen Elements mit einer piezoelektrischen Folie (12), insbesondere aus PVDF, die auf einem Träger (14) angeordnet und elektrisch mit Elektroden (16, 18) verbunden ist, welche über elektrische Leiter (20, 22) mit einer Meßeinrichtung verbunden sind, dadurch gekennzeichnet, daß man die piezoelektrische Folie (12) zusammen mit ihrem Träger (14) mit einer einstückigen polymerisierbaren, vorzugsweise elektrisch isolierenden Überzugsschicht (24) umhüllt, so daß der Teil (24a) der Überzugsschicht (24) oberhalb der piezoelektrischen Folie (12) eine Schutzschicht bildet, die von der piezoelektrischen Folie (12) untrennbar oder im wesentlichen untrennbar gemacht ist.

2. Verfahren nach Anspruch 1, dadurch gekennzeichnet, daß man eine piezoelektrische Folie (12) mit einer gegenüber den zum Zeitpunkt des Formens eingesetzten Oberflächen geringen Oberfläche verwendet.

3. Verfahren nach Anspruch 1 oder 2, dadurch gekennzeichnet, daß der Träger eine im wesentlichen zylindrische Form hat, wobei ein Ende des Zylinders als Auflagefläche für die piezoelektrische Folie (12) dient, die ausreichend dimensioniert ist, um seitlich um den Zylinder (14) herum überzustehen.

4. Verfahren nach Anspruch 3, dadurch gekennzeichnet, daß der Zylinderträger (14) einen Durchmesser aufweist, der kleiner als der Enddurchmesser des Fühlers (10) ist, so daß beim Füllen des Raumes rund um den Zylinderträger (14) der piezo-elektrischen Folie (12) und oberhalb der Folie (12) dank der sehr großen Kontaktfläche im Bereich des Zylinderträgers eine einstückige Schicht (24) zum Schutz der Folie und zur endgültigen Fixierung der Folie (12) auf dem Träger (14) geschaffen wird.

5. Verfahren nach einem der Ansprüche 1 bis 4, dadurch gekennzeichnet, daß die Gesamtheit aus Träger (14), piezoelektrischer Folie (12) und einstückiger Schutzschicht (24) zumindest teilweise innerhalb einer an Masse oder Erde gelegten elektrischen Schirmhülse (26) angeordnet ist.

6. Akustischer Fühler für Schallwellen, insbesondere Stoßwellen, die sich in einem den Fühler umgebenden Ausbreitungsmedium fortpflanzen, zwecks Messung des Drucks dieser Wellen, umfassend eine piezoelektrische Folie (12), insbesondere aus PVDF, die auf einem Träger (14) angeordnet und elektrisch mit Elektroden (16, 18) verbunden ist, welche über elektrische Leiter (20, 22) mit einer Meßeinrichtung verbunden sind, dadurch gekennzeichnet, daß die piezoelektrische Folie (12) zusammen mit ihrem Träger (14) mit einer einstückigen polymerisierten, vorzugsweise elektrisch isolierenden Überzugsschicht (24) umhüllt ist, so daß der Teil (24a) der Überzugsschicht (24) oberhalb der piezoelektrischen Folie (12) eine Schutzschicht bildet, die von der piezoelektrischen Folie (12) untrennbar oder im wesentlichen untrennbar ist.

7. Fühler nach Anspruch 6, dadurch gekennzeichnet, daß der Träger (14) im wesentlichen die Form eines Zylinders hat, dessen eines Ende als Auflagefläche für die piezoelektrische Folie (12) dient, die ausreichend dimensioniert ist, um seitlich um den Zylinder (14) herum überzustehen.

8. Fühler nach Anspruch 6 oder 7, dadurch gekennzeichnet, daß der Zylinderträger (14) einen Durchmesser (d) aufweist, der kleiner als der Enddurchmesser des Fühlers ist, so daß beim Füllen des Raumes rund um den Zylinderträger (14) und oberhalb der Folie (12) die einstückige Schutzschicht (24) erhalten wird.

9. Fühler nach einem der Ansprüche 6 bis 8, dadurch gekennzeichnet, daß das Material der Überzugsschicht ein elektrisch isolierendes polymerisierbares Material ist, vorzugsweise ausgewählt aus einem polymerisierbaren Epoxidharz, insbesondere vom Araldittyp, oder einem Produkt, wie Polychlortrifluorethylen, mit einer mit PVDF im wesentlichen identischen Impedanz.

10. Fühler nach einem der Ansprüche 6 bis 9, dadurch gekennzeichnet, daß das polymerisierbare Material der Schutzschicht (24) eine Impedanz aufweist, die identisch oder ähnlich der Impedanz der piezoelektrischen Folie (12) ist, und der Träger (14) vorteilhafterweise aus dem gleichen polymerisierbaren Material besteht.
